**Europäisches Patentamt**

**European Patent Office**

**Office européen des brevets**

(11) Veröffentlichungsnummer: **0 050 160**
A1

# (12) EUROPÄISCHE PATENTANMELDUNG

(21) Anmeldenummer: 80106178.9

(22) Anmeldetag: 10.10.80

(51) Int. Cl.³: **D 03 C 1/00, F 16 D 11/06**

(43) Veröffentlichungstag der Anmeldung: **28.04.82**
**Patentblatt 82/17**

(84) Benannte Vertragsstaaten: **AT BE CH DE FR GB IT LI LU NL SE**

(71) Anmelder: **GEBRÜDER SULZER AKTIENGESELLSCHAFT, Zürcherstrasse 9, CH-8401 Winterthur (CH)**

(72) Erfinder: **Hintsch, Otto, Dr., Grundackerstrasse 5, CH-8304 Wallisellen (CH)**
Erfinder: **Jülich, Werner, Riedenerstrasse 74, CH-8304 Wallisellen (CH)**

(54) **Kupplungsanordnung zum Steuern der Schäfte einer Webmaschine.**

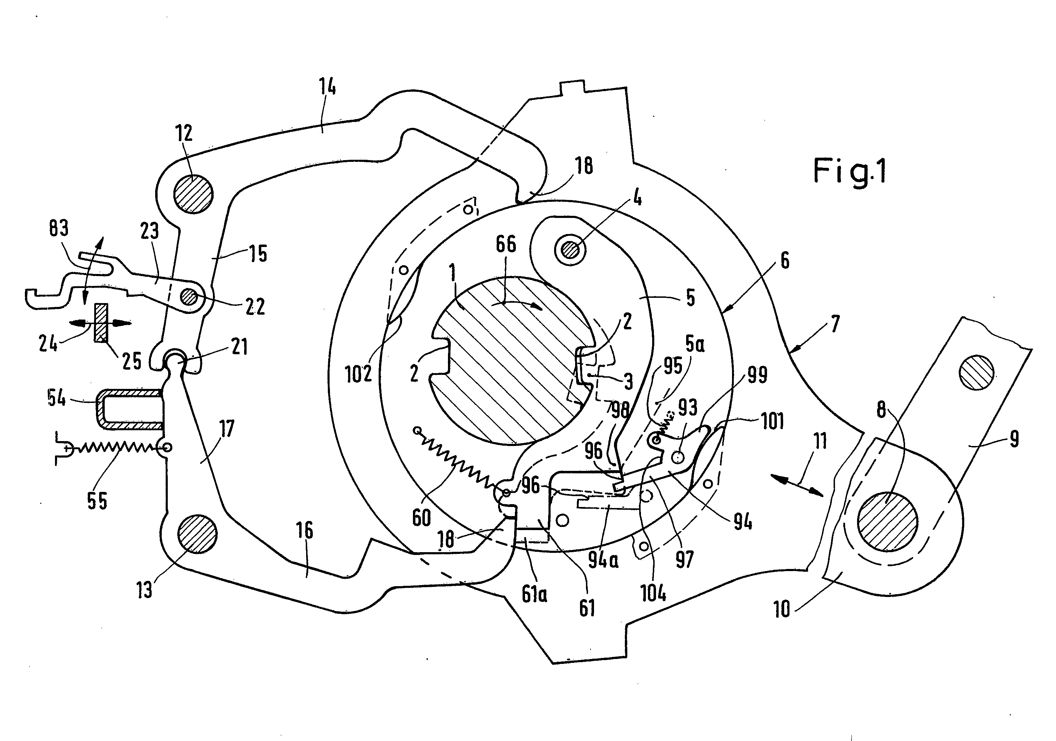

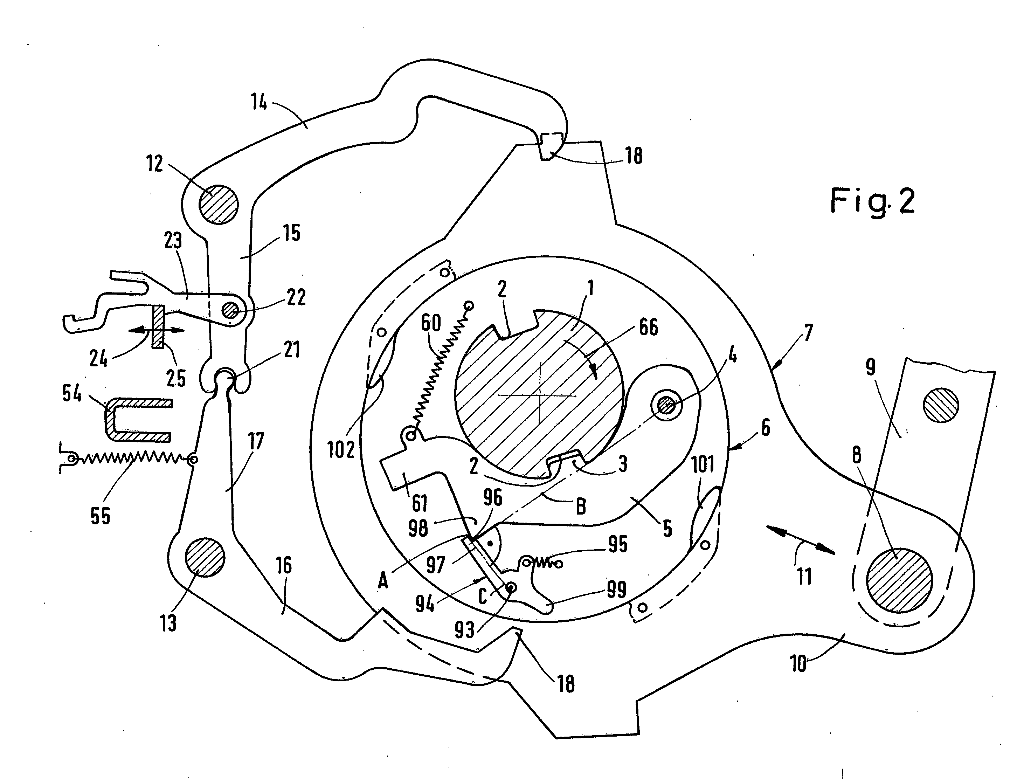

(57) Der Exzenter (6) trägt einen unter Wirkung einer Feder (95) stehenden, um (93) schwenkbaren Verriegelungshebel (94). Durch seinen Arm (97) vermag die unter der Wirkung der Feder (60) in der Kupplungsstellung nach Fig. 2 gehaltene Klinke (5) formschlüssig durch Übergreifen des Ansatzes (98) verriegelt zu werden. Die beiden Schwenkarme (B) und (C) von Klinke (5) bzw. Verriegelungshebel (94) stehen dabei im Berührungspunkt (A) vertikal aufeinander, wodurch die Selbsthemmung der Verriegelung erzielt wird. Es läßt sich hierdurch vermeiden, daß Klinke (5) unbeabsichtigt, z.B. durch Schwingungen und Zentrifugalkräfte in der Maschine oder bei Bruch der Feder (60) oder bei unbeabsichtigten Manipulationen durch eine Bedienungsperson in die in Fig. 1 gezeichnete Auskupplungsstellung (5a, 61a) gelangen kann.

0050160

T. 575/W1NH/

Gebrüder Sulzer Aktiengesellschaft. Winterthur / Schweiz

Kupplungsanordnung zum Steuern der Schäfte einer Webmaschine

Die Erfindung bezieht sich auf eine Kupplungsanordnung zum Steuern der Schäfte einer Webmaschine, mit einer mindestens eine Nut aufweisenden, intermittierend drehenden Antriebswelle und einer in die Nut einkuppelbaren, auf einem auf der Antriebswelle drehbar gelagerten Exzenter angeordneten Klinke sowie mit einer den Exzenter umschliessenden Lasche einer Kurbelstange für den Abtrieb zu den Schäften.

Bei bekannten Anordnungen dieser Art (DE-PS 11 54 048, DE-AS 27 41 200, DE-AS 27 41 199) wird die Klinke in Einkupplungsstellung mit der Antriebswelle ausschliesslich durch eine Feder gehalten. Dadurch ist es möglich, dass die Klinke z.B. bei stärkeren Schwingungen und Zentrifugalkräften in der Maschine oder bei Bruch oder Beschädigung bestimmter Teile, etwa bei Bruch der Feder, in unerwünschter Weise in Auskupplungsstellung gerät.

Der Erfindung liegt die Aufgabe zugrunde, eine besonders in dieser Hinsicht verbesserte Anordnung zu schaffen.

Die Erfindung liegt in einer auf dem Exzenter angeordneten die Klinke in Einkupplungsstellung mit der Antriebswelle formschlüssig verriegelnden Verriegelungseinrichtung.

Unter "formschlüssiger Verriegelung" soll verstanden werden, dass die Klinke aufgrund von Formschluss und nicht aufgrund von Kraftschluss seitens der Verriegelungseinrichtung in der Kupplungsposition gehalten wird, so dass eine selbsthemmende Wirkung entsteht und die Klinke nicht durch eine von ihr auszuübende Gegenkraft entriegelt werden kann.

Durch die Verriegelungseinrichtung kann die Klinke in formschlüssiger Art in Einkupplungsstellung mit der Antriebswelle gehalten werden, so dass unerwünschte und unbeabsichtigte Auskupplungen der Klinke vermieden werden können, wie sie etwa bei Schwingungen infolge von Zentrifugalkräften oder bei Bruch von einzelnen Teilen während des Betriebes eintreten können.

Weitere Merkmale ergeben sich aus der folgenden Beschreibung von Ausführungsbeispielen in Verbindung mit der Zeichnung und den Ansprüchen.

Fig. 1 ist ein Schnitt durch eine erfindungsgemäss ausgebildete Kupplungsanordnung zur Steuerung von Webschäften einer Webmaschine,

Fig. 2 erläutert eine andere Position der Teile.

Eine von der Hauptwelle der Webmaschine aus absatzweise jeweils um 180° in Drehung versetzte Antriebswelle 1 enthält zwei Nuten 2, in welche die Nase 3 einer bei 4 schwenkbar gelagerten, unter Wirkung einer Zugfeder 60 stehenden Kupplungsklinke 5 eingreifen kann. Die Klinke 5 besitzt einen Ansatz 98 (Schwenkarm B um 4). Die Klinke 5 ist auf einem auf Welle 1 drehbar gelagerten Exzenter 6 gelagert, der von einer Lasche 7 umschlossen ist. Diese bildet das Ende einer Kurbelstange 10, welche bei 8 an einem Uebertragungsgestänge 9 angelenkt ist, über das die gemäss Pfeil 11 entstehende Hin- und Herbewegung der Lasche 7 und Kurbelstange 10 auf einen zugehörigen Schaft einer Webmaschine übertragen wird.

Auf Welle 1 sind eine ganze Anzahl, z.B. sechs bis zwölf
der in Fig. 1 dargestellten Antriebsteile 6,7 angeordnet,
nämlich zu jedem Schaft der Webmaschine ein Exzenter 6
und eine Lasche 7. Die gesamten Teile 1,6,7 bilden die
sogenannte Exzentermaschine für Antrieb und Steuerung
sämtlicher Webschäfte der Webmaschine. Die Schäfte werden
entsprechend einem Bindungsprogramm für die Kettfäden
in Hoch- oder Tieffachstellung bewegt.

Zur Betätigung der Klinke 5 während des Betriebes sind
zwei auf den ortsfesten Lagerzapfen 12,13 schwenkbar gelagerte Steuerhebel 14,15 bzw. 16,17 eingebaut, die an
den freien Enden Haken 18 aufweisen, welche in den Weg der
Klinke 5 verschwenkt werden können. Diese Wirkung der
Teile ist in Fig. 1 erläutert. Arm 17 liegt unter Wirkung
einer Zugfeder 55 auf einem ortsfesten Anschlag 54. Der
Haken 18 des Steuerhebels 16,17 greift vor das freie Ende
61 der Klinke 5, so dass diese bei weiterer Drehung von
Welle 1 in die gestrichelt dargestellte Auskupplungsstellung 5a,61a gelangt, in der die Nase 3 aus der Nut 2
herausgezogen ist. Die Antriebswelle 1 läuft dann gemäss
Pfeil 66 absatzweise weiter, die Klinke 5, der Exzenter 6
und die Lasche 7 und somit auch der zugehörige Webschaft
stehen still. Der Webschaft behält die innegehabte Hochfach- oder Tieffachstellung bei.

Auf dem Exzenter 6 ist ein Verriegelungshebel 94 schwenkbar um 93 gelagert, der einen mit einer Schulter 96
(Schwenkarm C um 93) versehenen Verriegelungsarm 97 und
einen rückwärtigen Auflaufarm 99 besitzt. Dieser vermag
bei umlaufendem Exzenter 6 auf eine von zwei an der Lasche
7 angebrachten Auflaufflächen 101,102 aufzulaufen. Dadurch
gelangt der Verriegelungshebel 94 kurz vor dem Aufeinandertreffen der Teile 61,18 entgegen der Wirkung einer Feder
95 in die in Fig. 1 ausgezogen gezeichnete Entriegelungsposition, in welcher ein an der Klinke 5 angebrachter Ansatz 98, der mit der Schulter 96 zusammenarbeitet, in eine Ausnehmung 104 des Verriegelungshebels 94 ragt. Die Klinke 5, die unter der Wirkung einer Zugfeder 60 steht, wird durch den Steuerhebel 16,17 entgegen der Wirkung der Feder 60 in die in Fig. 1 gestrichelt wiedergegebene Auskupplungsstellung 5a geführt.

Durch eine bei 22 am Arm 15 des Steuerhebels 14,15 angelenkte Platine 23 und ein mit ihr zusammenarbeitendes, gemäss Pfeil 24 hin und her bewegtes Hubmesser 25 können die bei 21 aneinander gelenkten Steuerhebel 14 bis 17 in die ausgeschwenkte, wirkungslose Position nach Fig. 2 geschwenkt werden. Hierzu wird Platine 23 gemäss Pfeil 83 von einer nicht dargestellten Selektionseinrichtung abwärts bewegt, so dass sie beim nächsten Rechtshub des Hubmessers 25 von diesem mitgenommen wird. Die Steuerhebel 14 bis 17 erhalten dann die wirkungslose Ausschwenkposition nach Fig. 2.

Zugleich wird die Klinke 5 von der Feder 60 in die Kupplungsstellung nach Fig. 2 verschwenkt, in der die Nase 3 in eine der Nuten 2 eingreift. Die Schulter 96 vermag nunmehr unter der Wirkung der Zugfeder 95 und unter Verschwenkung des Verriegelungshebels 94 über den Ansatz 98 zu greifen (Berührungspunkt A), so dass die in Fig. 2 dargestellte Position entsteht, in der Klinke 5 unter Formschluss verriegelt ist.

Darunter ist zu verstehen, dass die Klinke 5 einer selbsthemmenden Sperrung durch den Verriegelungshebel 94 unterliegt. Die Schwenkarme B und C stehen dabei vertikal aufeinander. Die Klinke 5 kann durch keine von ihr auf den Verriegelungshebel 94 ausgeübte Kraft etwa bei Schwingungen während des Betriebes ausgekuppelt werden, weil durch diese Kraft seitens der Klinke kein Drehmoment an dem Verriegelungshebel 94 um 93 erzeugt werden kann.

Die Teile 5,6,94 laufen in dieser Position absatzweise je-

weils um 180° zusammen mit der Antriebswelle 1 um. Lasche 7 führt gemäss Pfeil 11 eine Hin- und Herbewegung aus, der zugehörige Webschaft wird ständig aus der einen Fachstellung, z.B. Hochfachstellung, in die andere Fachstellung, z.B. Tieffachstellung feführt usw. Bei irgendwelchen Maschinenerschütterungen oder bei unachtsamen Manipulationen einer Bedienungsperson während des Betriebes kann es nicht vorkommen, dass die Klinke 5 in unerwünschter Weise in die Auskupplungsstellung 5a nach Fig. 1 gelangt. Sie kann nur unter Lösen der Verriegelungsposition mittels der Auflaufkurven 101,102 entriegelt werden, wobei der aufgrund seiner Form im Wege stehende Verriegelungshebel 94 um 93 verschwenkt wird.

Beim Umlaufen der in Fig. 2 dargestellten Teile läuft der Auflaufarm 99 jeweils kurz bevor das Ende 61 von Klinke 5 in den Bereich von einem der Haken 18 gelangt, auf eine der Auflaufflächen 101,102. Hierdurch wird Klinke 5 jeweils kurzfristig entriegelt für den Fall, dass die Steuerhebel 14 bis 17 durch die Teile 25,23 eingeschwenkt sind und die Klinke 5 durch einen der Haken 18 ausgekuppelt werden soll. Es entsteht dann wieder die gestrichelte Position 5a,61a,94a nach Fig. 1.

0050160

Patentansprüche

1. Kupplungsanordnung zum Steuern der Schäfte einer Webmaschine, mit einer mindestens eine Nut aufweisenden, intermittierend drehenden Antriebswelle und einer in die Nut einkuppelbaren, auf einem auf der Antriebswelle drehbar gelagerten Exzenter angeordneten Klinke sowie mit einer den Exzenter umschliessenden Lasche einer Kurbelstange für den Abtrieb zu den Schäften, g e k e n n - z e i c h n e t durch eine auf dem Exzenter (6) angeordnete, die Klinke (5) in Einkupplungsstellung mit der Antriebswelle (1) formschlüssig verriegelnde Verriegelungseinrichtung (94).

2. Anordnung nach Anspruch 1, dadurch gekennzeichnet, dass die Verriegelungseinrichtung ein auf dem Exzenter (6) schwenkbar gelagerter, unter der Wirkung einer Feder (95) in Verriegelungsstellung gehaltener Verriegelungshebel (94) ist.

3. Anordnung nach den Ansprüchen 1 und 2, dadurch gekennzeichnet, dass der Verriegelungshebel (94) einen mit einer Schulter (96) versehenen Verriegelungsarm (97) aufweist, der mit einem an der Klinke (5) angebrachten Ansatz (98) zusammenarbeitet.

4. Anordnung nach den Ansprüchen 1 bis 3, dadurch gekennzeichnet, dass der Schwenkarm (B) des Ansatzes (98) um den Drehpunkt (4) der Klinke (5) in Verriegelungsposition vertikal zum Schwenkarm (C) der Schulter (96) um den Drehpunkt (93) des Verriegelungshebels (94) steht.

5. Anordnung nach den Ansprüchen 1 bis 4, dadurch gekennzeichnet, dass der Verriegelungshebel (94) einen Auflaufarm (99) aufweist, und dass die Lasche (7) mindestens eine Auflauffläche (101,102) enthält, mit welcher der Auflaufarm (99) zusammenarbeitet.

Fig.1

1/2

0050160

0050160

Fig.2

| **EINSCHLÄGIGE DOKUMENTE** | | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | D 03 C 1/00<br>F 16 D 11/06 |
| | <u>DE - A - 2 909 131</u> (KAISER)<br> * Figuren; Ansprüche *<br><br> -- | 1,2 | |
| AD | <u>DE - B - 1 154 048</u> (GROSSENHAIN)<br> * Figuren 1,3 *<br><br> -- | 1 | |
| AD | <u>DE - A - 2 741 200</u> (SULZER)<br> * Figuren 1-4 *<br><br> -- | 1 | RECHERCHIERTE SACHGEBIETE (Int. Cl.) |
| AD | <u>DE - A - 2 741 199</u> (SULZER)<br> * Insgesamt *<br><br> ---- | 1 | D 03 C<br>F 16 D |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-06-1981 | BOUTELEGIER |

EPA form 1503.1 06.78